# EUROPÄISCHE PATENTSCHRIFT

(11) **EP 1 515 870 B1**
(45) Veröffentlichungstag und Bekanntmachung des Hinweises auf die Patenterteilung: **10.09.2008**
(21) Anmeldenummer: 03761468.2
(22) Anmeldetag: 16.06.2003
(51) Int. Cl.: B60P 7/08

(54) **VORRICHTUNG ZUR SICHERUNG VON LADUNG**
DEVICE FOR SECURING A LOAD
DISPOSITIF POUR IMMOBILISER UNE CHARGE

(30) Priorität: 26.06.2002 DE 10228434
(43) Veröffentlichungstag der Anmeldung: 23.03.2005
(73) Patentinhaber: Harders, Walter, 28205 Bremen (DE); Stern, Reinald, 27721 Ritterhude (DE); Lemke, Wilfried, 41334 Nettetal (DE)
(72) Erfinder: Harders, Walter, 28205 Bremen (DE); Stern, Reinald, 27721 Ritterhude (DE); Lemke, Wilfried, 41334 Nettetal (DE)
(74) Vertreter: Möller, Friedrich
(86) Internationale Anmeldenummer: PCT/EP2003/006335
(87) Internationale Veröffentlichungsnummer: WO 2004/002778

(56) Entgegenhaltungen:
- EP-A- 1 162 112
- EP-A- 1 254 809
- US-B1- 6 641 342

## Beschreibung

Die Erfindung betrifft eine Vorrichtung zur Sicherung von Ladung auf einem Fahrzeug gemäß dem in der EP 1162112A offenbarten Oberbegriff des Anspruchs 1.

Die Erfindung bezieht sich auf das Gebiet der Sicherung von Ladung, die auf der Ladefläche von Fahrzeugen, insbesondere von spurgebundenen Fahrzeugen, wie Lastkraftwagen, Eisenbahhwaggons oder dergleichen, aufliegt. Im Falle von Lastkraftwagen wird häufig eine von der Zugmaschine abnehmbarer Auflieger, eine sogenannte Ladebrücke, verwendet, die an ihrer Oberseite die Ladefläche aufweist. Derartige Ladeflächen sind üblicherweise eben ausgeführt, damit je nach Bedarfsfall Ladung unterschiedlichster Art transportiert werden kann. Aufgrund der ebenen Ausführung der Ladefläche ist keine durch die Ladefläche selbst bedingte Sicherung der Ladung wie etwa bei Ladeflächen mit einer Mulde oder speziellen Ausnehmungen möglich. Die Ladung muss also individuell befestigt werden. Dies geschieht heute üblicherweise, indem die Ladung verzurrt wird und entsprechend an oder in der Ladefläche oder am Fahrzeug selbst Zurreinrichtungen angeordnet sind.

Aus der EP 0 654 374 A1 ist eine Zurreinrichtung in Aufbautenwänden von Lastkraftwagen bekannt. Diese Zurreinrichtung weist eine Vielzahl von im Abstand übereinander in waagerechten Reihen angeordnete Zurrtöpfe mit einem in jedem Zurrtopf liegenden, mittig verlaufenden Stab auf. Die Zurrtöpfe sind in Aussparungen der Aufbautenwand bündig zur Wandfläche von der Aufbauten-Innenseite her eingesetzt und lagefestgelegt. Jeder Zurrtopf hat eine kegelstumpfförmige Topfform, die sich zum Topfboden verjüngt und ist in eine korrespondierende Ausfräsung eingesetzt und dort mittels Kleber fixiert.

Aus der DE 296 14 109 U1 sind Zurrpunkte wie Zurrmulden oder Rahmenhaken an Außenrahmenprofilen von Transportmitteln wie Lastkraftwagen und dergleichen bekannt, die aus einem muldenförmigen oder ebenen Grundkörper bestehen, in oder an dem ein Ring oder ein Haken zur Aufnahme bzw. Verankerung von Zurrmitteln, wie Gurten, Ketten und Drahtseilen, beweglich und versenkbar oder starr befestigt sind, wobei der Zurrpunkt durch eine direkt in das Außenrahmenprofil eingebrachte Öffnung mit einem innerhalb des Außenrahmenprofils starr angeordneten Steg gebildet ist, der zwei gegenüberliegende Ränder der Öffnung miteinander verbindet und zur Aufnahme bzw. Verankerung von Zurrmitteln nutzbar ist, wobei mehrere Zurrpunkte nach Art und Verwendungseinsatz des Transportmittels und nach erforderlichen Kraft- und Lastverhältnissen beim Bau des Transportmittels an definierbaren Stellen des Außenrahmenprofils anordenbar sind.

Nachteilig bei diesem bekannten Ladungssicherungseinrichtungen oder Ladungssicherungselementen ist jedoch, deren mangelnde Flexibilität. Bei der Lösung gemäß der EP 0 654 374 A1 oder der DE 296 14 109 U1 wird die Position der Ladungssicherungselemente in Form von Zurrpunkten beim Bau des jeweiligen Fahrzeugs festgelegt. Darüber hinaus ist als einzige Ladungssicherungsmaßnahme das Verzurren von Ladung möglich.

Aus der EP 1 162 112 A1 ist eine Vorrichtung zur Sicherung von Ladung auf der Ladefläche eines Fahrzeugs bekannt, die eine untere Kupplungshälfte in Form einer auf oder in der Ladefläche fest anzuordnenden Buchse und eine obere Kupplungshälfte in Form eines Ankers aufweist. Der die obere Kupplungshälfte darstellende Anker ist in die Buchse zur Bildung der zweiten Kupplungshälfte einsteckbar und wird hierin mit Schnäppermechanismen gesichert. Die Schnäppermechanismen werden durch Federn betätigt.

Der Erfindung liegt daher die Aufgabe zugrunde, eine flexible, universell einsetzbare Vorrichtung zur Sicherung von Ladung auf einer Ladefläche eines Fahrzeugs anzugeben.

Diese Aufgabe wird erfindungsgemäß mit den Merkmalen des Anspruchs 1 gelöst. Dazu weist das Kuppelstück eine mit der Ladefläche fest verbundene untere Kupplungshälfte und eine zur Verbindung mit der Ladungssicherung vorgesehene obere Kupplungshälfte auf, wobei die obere Kupplungshälfte formschlüssig und lösbar mit der unteren Kupplungshälfte verbunden ist.

Wenn bei dem zweiteiligen Kuppelstück mit oberer und unterer Kupplungshälfte die obere Kupplungshälfte eine Grundplatte mit insbesondere kreisförmiger Außenkontur und einen unter der Grundplatte angeordneten und mit dieser verbundenen Verriegelungsbolzen mit einer Sperre umfasst, ist damit eine einfache Möglichkeit des lösbaren Verbindens der oberen Kupplungshälfte mit einer korrespondierend ausgestalteten unteren Kupplungshälfte gegeben.

Zur Aufnahme der oberen Kupplungshälfte umfaßt die untere Kupplungshälfte eine mit der Ladefläche verbundene Aufnahmeplatte, die ein als Langloch ausgebildetes Einschubloch mit einem vergrößerten Rundloch an dessen einem Ende aufweist, wobei die Kontur des Rundlochs auf den Durchmesser der Sperre und die Kontur des verbleibenden Einschublochs auf den Durchmesser des Verriegelungsbolzens in dessen Mittelteil abgestimmt ist. Dann kann der Verriegelungsbolzen mitsamt der Sperre in das vergrößerte Rundloch eingeführt werden und die obere Kupplungshälfte auf der Aufnahmeplatte in Richtung der weiteren Ausdehnung des Einschublochs verschoben werden, so dass die Sperre hinter oder unter die Aufnahmeplatte greift und die obere Kupplungshälfte damit gegen Abheben gesichert ist. Dieses Verbinden der beiden Kupplungshälften ist besonders einfach und mit wenigen Handgriffen zu bewerkstelligen.

Zur Fixierung der oberen Kupplungshälfte auf der Aufnahmeplatte der unteren Kupplungshälfte ist vorteilhaft eine Sicherungsplatte mit wenigstens einem Sicherungsbolzen vorgesehen, wobei der oder jeder Sicherungsbolzen zum Eingriff in ein korrespondierendes Sicherungsloch in der Aufnahmeplatte vorgesehen ist. Die Sicherungsplatte verhindert das Verschieben der oberen Kupplungshälfte in Richtung auf das vergrößerte Rundloch, so dass obere Kupplungshälfte erst durch Entfernen der Sicherungsplatte von der unteren Kupplungshälfte lösbar ist.

Wenn die Sicherungsplatte eine auf die Außenkontur der Grundplatte der oberen Kupplungshälfte abgestellte Innenbohrung aufweist, umgibt die Sicherungsplatte die obere Kupplungshälfte allseitig, so dass eine sichere Lage der Sicherungsplatte und damit eine besonders gute Fixierung der oberen Kupplungshälfte gewährleistet ist. Für den gleiche Zweck ist es ebenfalls nützlich, wenn bei mehreren Sicherungsbolzen deren Position symmetrisch um die Innenbohrung verteilt ist. Die Außenkontur der Grundplatte der oberen Kupplungshälfte ist bevorzugt kreisförmig, so dass sich die obere Kupplungshälfte auf der unteren Kupplungshälfte durch Drehung in beliebige Richtungen ausrichten lässt. Damit ist auch eine entsprechende, bedarfsgerechte Orientierung der jeweiligen Ladungssicherungen möglich.

Zum Verhindern des Abhebens der Sicherungsplatte von der Grundplatte der unteren Kupplungshälfte sind vorteilhaft federnde Sicherungsrasten vorgesehen, die mit dem Einsetzen der Sicherungsplatte eine ausreichende Fixierung der Sicherungsplatte gewährleisten, so dass diese sich z.B. im Falle von Rüttelbelastungen bei fahrendem Fahrzeug nicht löst. Auf der anderen Seite ist die Federkraft so bemessen, dass ein beabsichtigtes Lösen der Sicherungsplatte jederzeit möglich bleibt.

Die Erfindung geht dabei von der Erkenntnis aus, dass die bekannten Ladungssicherungsvorrichtungen stets für bestimmte Anwendungsfälle, also z.B. für das Anschlagen von Zurrgurten, vorgesehen sind. Für eine andersartige Ladungssicherung., z.B. mittels Stützen, kann die Ladungssicherungsvorrichtung zum Anschlagen von Zurrgurten nicht verwendet werden. Es muss also entweder die Ladungssicherungsvorrichtung oder gar das Fahrzeug ausgetauscht werden, so dass die gewünschte Ladungssicherung vorgenommen werden kann. Gemäß der Erfindung weist die Vorrichtung zur Ladungssicherung ein Kuppelstück zum Verbinden der jeweiligen Ladungssicherung mit der Ladefläche des Fahrzeugs auf. Das Kuppelstück ist dazu auf der einen Seite zum Verbinden mit der Ladefläche des Fahrzeugs und auf der anderen Seite zum Verbinden mit der jeweiligen Ladungssicherung ausgeformt.

Im Zusammenhang mit der Erfindung bzw. bevorzugten Ausführungsformen der Erfindung wird der Begriff "Ladungssicherung" derart verwendet, dass darunter alle zur Arretierung, Abstützung, Lagefixierung, etc. vorgesehenen oder geeigneten Mittel wie z.B. Ketten, Seile oder Zurrgurte u.ä. sowie Stützen, Streben, Säulen oder Rungen u. dgl. und schließlich Bolzen wie insbesondere Normbolzen, Stifte oder Stäbe, etc. zusammengefaßt sind. Jede Ladungssicherungsvorrichtung weist Mittel zum Anschlag oder zur Aufnahme solcher Ladungssicherungen auf.

Der Vorteil der Erfindung besteht darin, dass das Kuppelstück - oder ein Teil desselben - mit der Ladefläche und mit dem Kuppelstück wiederum die jeweilige Ladungssicherung verbunden wird. Das Kuppelstück wirkt damit gleichsam als Adapter für unterschiedlichste Ladungssicherungen. Mit der Positionierung des Kuppelstücks auf der Ladefläche ist auch die Position der jeweiligen Ladungssicherung beeinflussbar.

Nachfolgend wird ein bevorzugtes Ausführungsbeispiel der Erfindung anhand der Zeichnung näher erläutert. Darin zeigen
- Fig. 1: ein spurgebundenes Fahrzeug,
- Fig. 2a-2c: einen Auflieger eines spurgebundenen Fahrzeugs
- Fig. 3a, 3b: eine Aufnahmeplatte in einer Seitenansicht und einer Draufsicht,
- Fig. 4a-c: ein Ladungssicherungselement in einer Seitenansicht und einer Draufsicht sowie einen Normbolzen,
- Fig. 5a-c: eine Sicherungsplatte in einer Draufsicht und einer Seitenansicht sowie eine Sicherungsraste,
- Fig. 6: ein zweiteiliges Ladungssicherungselement mit einem ersten als Basis und einem zweiten als Aufnahme bezeichneten Teil,
- Fig. 7a, 7b: die Basis des zweiteiligen Ladüngssicherungselementes,
- Fig. 8a, 8b: die Aufnahme des zweiteiligen Ladungssicherungselementes
- Fig. 9a-d: das Verbinden von Basis und Aufnahme des zweiteiligen Ladungssicherungs-elementes, und
- Fig. 10: die Belastungsmöglichkeiten des zweiteiligen Ladungssicherungselementes.

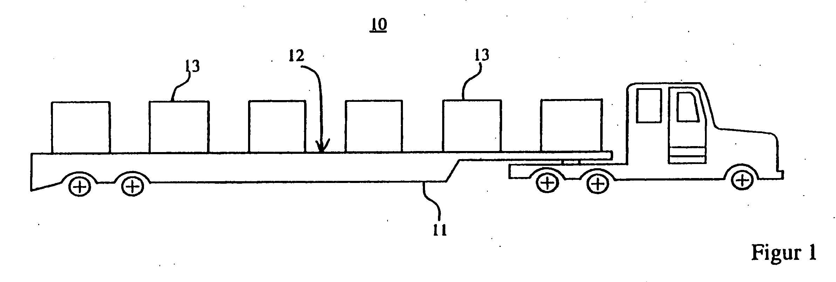

Fig. 1 zeigt als Beispiel für ein spurgebundenes Fahrzeug einen Lastkraftwagen 10 mit einem Auflieger 11 und der durch dessen Oberseite gebildeten Ladefläche 12. Auf der Ladefläche 12 ist Ladung 13 aufgebracht.

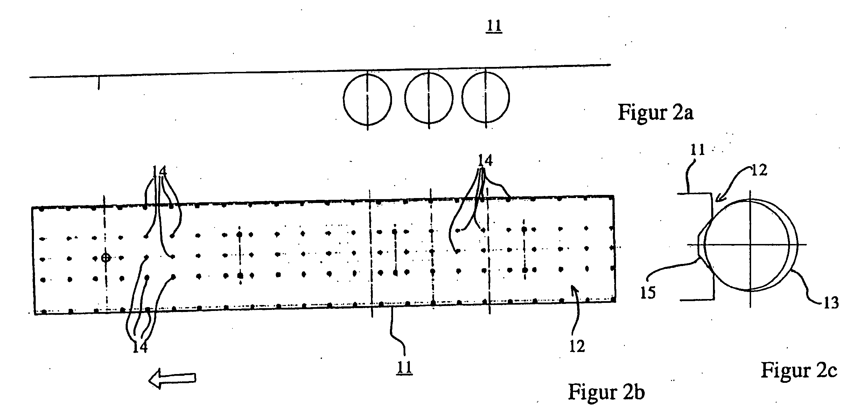

Fig. 2a-2c zeigen den Auflieger 11 in einer Seitenansicht, in einer Draufsicht und einer Rückansicht. In der Draufsicht auf den Auflieger 11 gemäß Fig. 2b sind eine Vielzahl von Positionen 14 ersichtlich, die in einer rasterartigen Anordnung gleichmäßig über die Ladefläche 12 verteilt sind. In Verbindung mit Fig. 2c ist ersichtlich, dass die Positionen 14 (Fig. 2b) jeweils entlang der Längsseiten des Aufliegers 11 sowie mittig und entlang der beiden Seiten einer Coilmulde 15 zur Aufnahme von Ladung 13 in Form von Coils angeordnet sind. Zur besseren Orientierung wird in Fig. 2b die Fahrtrichtung des Aufliegers 11 durch einen Blockpfeil angezeigt. An jeder der Positionen 14 kann eine Vorrichtung zur Sicherung von Ladung 13 - im folgenden auch als Ladungssicherungsvorrichtung bezeichnet - auf der Ladefläche (12) vorgesehen sein.

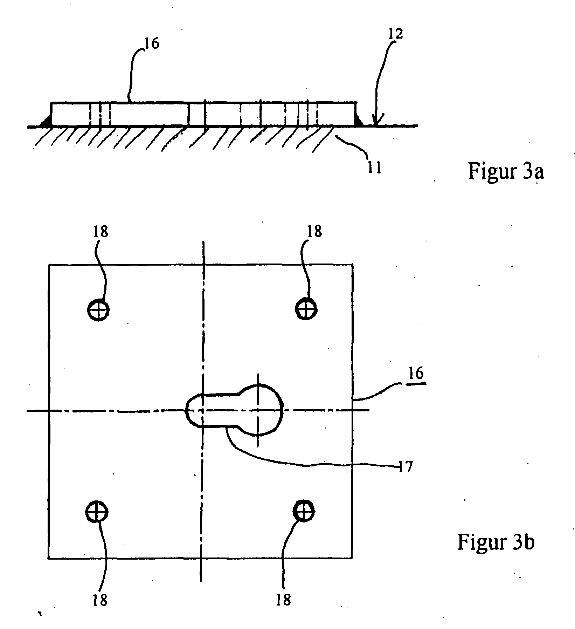

Fig. 3a, 3b zeigen eine mit der Ladefläche 12 des Aufliegers 11 fest verbundenen (untere) Kupplungshälfte eines Kuppelstücks der Ladungssicherungsvorrichtung in Form einer Aufnahmeplatte 16 in einer Seitenansicht und einer Draufsicht. Eine solche untere Kupplungshälfte kann an einigen oder sämtlichen Positionen 14 (Fig. 2b, 3a, 3b) vorgesehen und dort mit der Ladefläche 12 des Aufliegers 11 dauerhaft, z.B. durch Verschweißen, oder lösbar, z.B. durch Schrauben oder Niete, verbunden sein.

In der Seitenansicht gemäß Fig. 3a ist ersichtlich, dass die Aufnahmeplatte 16 auf der Oberseite der Ladefläche 12 des Aufliegers 11 angeordnet ist. Die Position einer Aufnahmeplatte 16 auf der Ladefläche 12 des Aufliegers 11 ist vorteilhaft auf den Verlauf von nicht dargestellten Verstärkungen, wie Streben oder Trägem, der Ladefläche 12 des Aufliegers 11 abgestimmt, so dass einzelne oder jede Aufnahmeplatte(n) 16 an zur Zug- oder Druckbelastung besonders geeigneten Positionen des Aufliegers 11 angeordnet sind. In der Draufsicht auf die Aufnahmeplatte 16 gemäß Fig. 3b sind ein als Langloch ausgebildetes Einschubloch 17 und vier äußere Sicherungslöcher 18 ersichtlich. Das Einschubloch 17 weist an einem Ende ein vergrößertes Rundloch auf, während am anderen Ende der Mittelpunkt des Rundlochs mit dem Zentrum der Aufnahmeplatte 16 zusammenfällt.

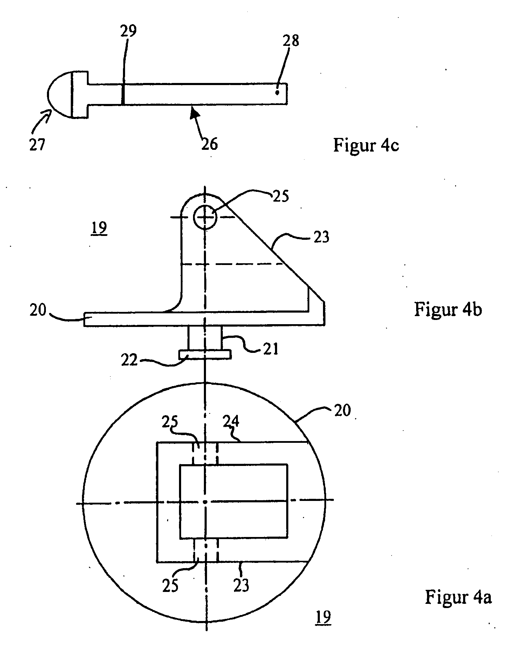

Fig. 4a, 4b zeigen eine Ladungssicherungsvorrichtung in Form eines Zurrgurtanschlags 19 in einer Seitenansicht und einer Draufsicht. Wie aus der Draufsicht gemäß Fig. 4a ersichtlich ist, hat der Zurrgurtanschlag 19 eine kreisförmige Grundplatte 20. In der Seitenansicht des Zurrgurtanschlags 19 gemäß Fig. 4b ist ersichtlich, dass sich unterhalb der Grundplatte 20 ein Verriegelungsbolzen 21 mit einer Sperre 22 erstreckt. Die Sperre 22 ist einstückig mit dem Verriegelungsbolzen 21 verbunden und als außen umlaufender, senkrecht zur Mittelachse des Verriegelungsbolzens 21 und parallel zur Grundplatte 20 verlaufender Flansch ausgeführt. Die Grundplatte 20 bildet mit dem Verriegelungsbolzen 21 und dessen Sperre 22 eine (obere) Kupplungshälfte des Kuppelstücks der jeweiligen Ladungssicherungsvorrichtung. Im gezeigten Ausführungsbeispiel wird das Kuppelstück demnach durch die Aufnahmeplatte 16 (Fig. 3a, 3b) einerseits als untere Kupplungshälfte und die Grundplatte 20 mit Verriegelungsbolzen 21 und Sperre 22 andererseits als obere Kupplungshälfte gebildet.

Der Verriegelungsbolzen 21 ist zum Einführen in das Einschubloch 17 (Fig. 3b) der Aufnahmeplatte 16 vorgesehen. Der Kontur des Rundlochs am Einschubloch 17 ist dazu auf den Durchmesser der Sperre 22 des Verriegelungsbolzens 21 abgestimmt. Die Kontur des verbleibenden Einschublochs 17 ist entsprechend auf den Durchmesser des Verriegelungsbolzens 21 in dessen Mittelteil abgestimmt. Untere und obere Kupplungshälfte sind damit formschlüssig und lösbar miteinander verbindbar.

In der Ladefläche 12 des Aufliegers 11 sind im Bereich des Einschublochs 17 unterhalb der Aufnahmeplatte 16 ausreichend große Vertiefungen vorgesehen, die z.B. beim Umrüsten eines Aufliegers 11 zur Verwendung einer erfindungsgemäßen Ladungssicherungsvorrichtung durch "Ausbrennen" aus dessen Ladefläche 12 oder einer zugehörigen Verstärkung erreicht werden.

Oberhalb der Grundplatte 20 erstrecken sich zum Anschlagen einer Ladungssicherung in Form eines Zurrgurtes, einer Kette, eines Seiles oder dergleichen zwei parallel zueinander und beabstandet voneinander angeordnete, vertikale Laschen 23, 24 (vgl. auch Fig. 4a) mit jeweils einer Bohrung 25 zum Einführen eines Normbolzens 26. Der Normbolzen 26 ist in Fig. 4c dargestellt. Dieser weist zur Handhabung ein Griffstück 27 und am gegenüberliegenden Ende ein Splintloch 28 zum Sichern des Normbolzens 26 gegen Herausfallen in an sich bekannter Weise auf. Zur Vorarretierung des Normbolzens 26 kann auf dessen Länge wenigstens eine Nut 29 für eine Federkugel vorgesehen sein. Die nicht dargestellte Federkugel ist dann in der oder jeder Bohrung 25 der Laschen 23, 24 vorgesehen und arretiert den Normbolzen 26 in eingeführter Position gegen Herausfallen. Am in den Zurrgurtanschlag 19 eingeführten Normbolzen 26 wird in an sich bekannter und daher auch nicht speziell dargestellter Art und Weise z.B. ein Zurrgurt oder dergleichen angeschlagen. Der Normbolzen 26 ist als Einzelteil sinnvoll, da er bei Beschädigung kostengünstig ausgetauscht werden kann. Wie im folgenden im Zusammenhang mit der Erläuterung des Verbindens des Zurrgurtanschlags 19 mit der Aufnahmeplatte 16 deutlich wird, kann die obere Kupplungshälfte - und damit der Zurrgurtanschlag 19 - bedarfsgerecht ausgerichtet werden (Möglichkeit der Drehung um 360°).

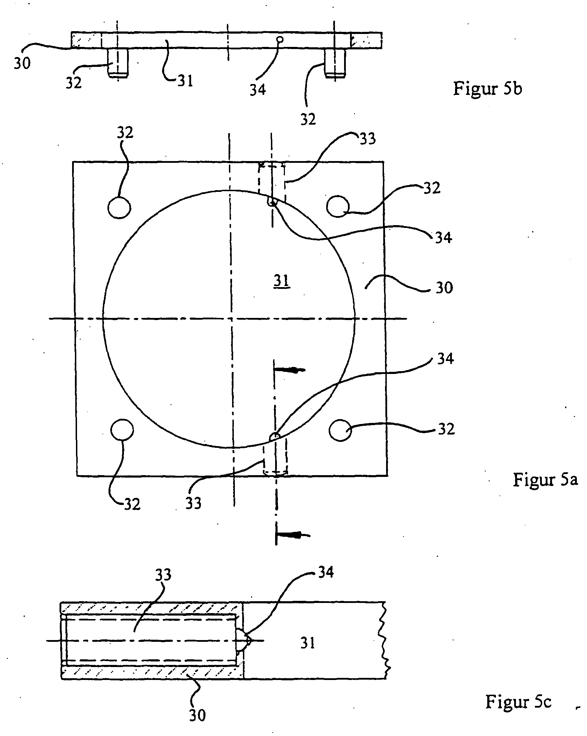

Nachfolgend wird das Verbinden des Zurrgurtanschlags 19 mit der Aufnahmeplatte 16 unter Bezug auf die Fig. 3b, 4b erläutert. Zum Verbinden des Zurrgurtanschlags 19 mit der Aufnahmeplatte 16 wird der Verriegelungsbolzen 21 des Zurrgurtanschlags 19 in das vergrößerte Rundloch des Einschublochs 17 der Aufnahmeplatte 16 eingeführt und der Zurrgurtanschlag 19 dabei soweit abgesenkt, dass dessen Grundplatte 20 flächig auf der Aufnahmeplatte 16 aufliegt. Daraufhin wird der Zurrgurtanschlag 19 in Richtung auf den Mittelpunkt der Aufnahmeplatte 16 verschoben. Die Sperre 22 des Verriegelungsbolzens 21 greift jetzt hinter oder unter die Aufnahmeplatte 16 und verhindert ein Abheben des Zurrgurtanschlags 19. Die vollständige Fixierung des Zurrgurtanschlags 19 auf der Aufnahmeplatte 16 wird nachfolgend im Zusammenhang mit Fig. 5a-c erläutert.

Fig. 5a, 5b zeigen eine Sicherungsplatte 30. Wie aus der Draufsicht auf die Sicherungsplatte 30 gemäß Fig. 5a ersichtlich ist, weist diese eine auf die Außenkontur der Grundplatte 20 (vgl. z.B. Fig. 4a) des Zurrgurtanschlags 19 abgestellte Innenbohrung 31 auf. In der Seitenansicht gemäß Fig. 5b sind Sicherungsbolzen 32 ersichtlich, die in ihrer Position unter der Sicherungsplatte 30 auf die Position der korrespondierenden Sicherungslöcher 18 in der Aufnahmeplatte 16 (vgl. z.B. Fig. 3b) abgestimmt sind. Die Außenkontur der Sicherungsplatte 30 entspricht vorteilhaft aber nicht notwendigerweise im wesentlichen der Außenkontur der Aufnahmeplatte 16. Die Sicherungsplatte 30 wird um die Grundplatte 20 des Zurrgurtanschlags 19 auf die Aufnahmeplatte 16 gelegt. Der Zurrgurtanschlag 19 ist dabei auf der Aufnahmeplatte 16 zentriert. Durch den Eingriff der Sicherungsbolzen 32 in die Sicherungslöcher 18 ist die Sicherungsplatte 30 und damit auch der Zurrgurtanschlag 19 gegen Verschieben auf der Aufnahmeplatte 16 gesichert. Um ein unbeabsichtigtes oder unerwünschtes Ablösen der Sicherungsplatte 30 von der Aufnahmeplatte 16 und damit eine Auflösung der Arretierung des Zurrgurtanschlags 19 zu verhindern, ist wenigstens eine Sicherungsraste 33 vorgesehen, wie sie in Fig. 5c dargestellt ist. Die Sicherungsraste 33 wird im wesentlichen durch einen federnd gelagerten Stift 34 gebildet, wobei eine nicht dargestellte Feder in einer Position vorgespannt ist, dass ein Ende des Stiftes 34 aus der Sicherungsraste 33 herausragt.

Die Sicherungsraste 33 kann in der Sicherungsplatte 30 angeordnet sein. Dann greift der Stift 34 der Sicherungsraste 33 in eine Vertiefung oder umlaufende Nut 35 im Rand der Grundplatte 20 des Zurrgurtanschlags 19 ein. Die Sicherungsraste 33 kann alternativ oder zusätzlich auch in der Grundplatte 20 des Zurrgurtanschlags 19 angeordnet sein (nicht dargestellt), wobei dann der Stift 34 in eine Vertiefung oder eine umlaufende Nut im Rand der Innenbohrung 31 der Sicherungsplatte 30 eingreift. Vorzugsweise sind jeweils zwei Sicherungsrasten 33 paarweise gegenüberliegend angeordnet, wie dies in Fig. 5a durch Markierung der entsprechenden Positionen durch die beiden Pfeile und die zugehörigen, gestrichelten Linien veranschaulicht ist.

Der Verriegelungsbolzen 21, der die Grundplatte 20 mit der Aufnahmeplatte 16 und damit mit dem Zurrgurtanschlag 19 mit dem Auflieger 11 oder dessen Fahrgestell verbindet, wird lediglich auf Zug beansprucht. Die Beanspruchung auf Abscheren wird durch die vier jeweils in ein Sicherungsloch 18 der Aufnahmeplatte 16 eingreifenden Sicherungsbolzen 32 übernommen.

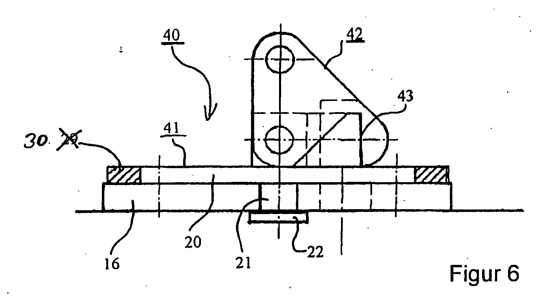

Fig. 6 zeigt als alternative Ausführungsform der oben beschriebenen Ladungssicherungsvorrichtung in Form des Zurrgurtanschlags 19 eine Ladungssicherungsvorrichtung mit einem zweiteiligen Ladungssicherungselement 40. Das zweiteilige Ladungssicherungselement 40 weist einen ersten, mit der Aufnahmeplatte 16 zusammenwirkenden Teil, der im folgenden als Verankerungsbasis 41 und einem zweiten, lösbar mit der Verankerungsbasis 41 verbundenen Teil, der im folgenden als Verankerungsfuß 42 bezeichnet wird, auf. Die Verankerungsbasis 41 entspricht hinsichtlich der Grundplatte 20 und des Verriegelungsbolzens 21 der oberen Kupplungshälfte des vorstehend beschriebenen Zurrgurtanschlags 19 und wird auch wie diese, d.h. unter Verwendung der Sicherungsplatte 30, mit der jeweiligen Aufnahmeplatte 16 verbunden. Verankerungsbasis 41 und Aufnahmeplatte 16 bilden entsprechend zusammen das Kuppelstück zum Verbinden einer Ladungssicherung mit der Ladefläche 12 eines Fahrzeugs 10. In Bezug auf weitere Details des Kuppelstücks wird auf die dessen vorangehenden Beschreibung verwiesen.

An den Verankerungsfuß 42 als Teil der Ladungssicherung kann z.B. ein Zurrgurt oder dergleichen angeschlagen werden. Der Verankerungsfuß 42 ist mit der Verankerungsbasis 41 des Kuppelstücks verbindbar. Durch eine Relativbewegung zwischen dem Verankerungsfuß 42 und der Verankerungsbasis 41 ist die Verbindung zwischen dem Verankerungsfuß 42 und dem Kuppelstück formschlüssig arretierbar.

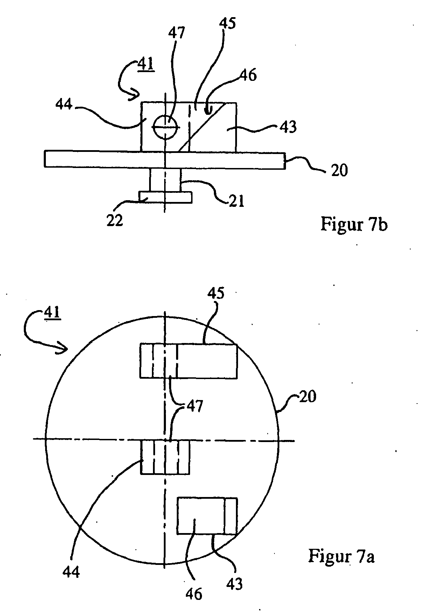

Fig. 7a, 7b zeigt die Verankerungsbasis 41 der zweiteiligen Ladungssicherungselementes 40 (Fig. 6) in einer Seitenansicht und einer Draufsicht. In der Draufsicht auf die Verankerungsbasis 41 gemäß Fig. 7a sind auf der Grundplatte 20 drei mit dieser bevorzugt einstückig verbundene Führungselemente 43, 44, 45 ersichtlich. Ein erstes Führungselement 43 weist bei rechteckiger Grundfläche an der einer der Mittellinien der Grundplatte 20 zugewandten Schmalseite eine Rampe 46 auf. Ein zweites und ein drittes Führungselement 44, 45 mit jeweils gleichfalls rechteckiger Grundfläche weist jeweils eine Bohrung 47 auf, deren Mittelpunkt über einer der Mittellinien der Grundplatte 20 liegt. In der Seitenansicht der Verankerungsbasis 41 gemäß Fig. 7b ist das erste Führungselement 43 mit der Rampe 46 sowie das aus dieser Ansicht dahinter liegende zweite Führungselement 44 mit der Bohrung 47 und das größtenteils verdeckte dritte Führungselement 45 sichtbar.

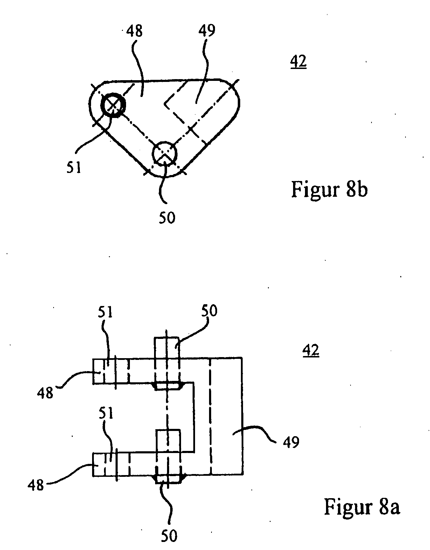

Fig. 8a, 8b zeigen den Verankerungsfuß 42 des zweiteiligen Ladungssicherungselementes 40 (Fig. 6) in einer Seitenansicht und einer Draufsicht. In der Draufsicht auf den Verankerungsfuß 42 gemäß Fig. 8a ist ersichtlich, dass dieser durch einen U-förmig mit zwei Schenkeln 48 und einem diese verbindenden Joch 49 ausgebildet ist. Aus jedem der beiden Schenkel 48 ragt - etwa im Bereich einer auf eine gedachte Hüllkontur bezogenen Mittellinie - ein Zapfen 50 heraus. Am freien Ende jedes Schenkels 48 durchdringt diesen jeweils eine Bohrung 51, deren Achse parallel zur Achse der beiden Zapfen 50 verläuft. In der Seitenansicht des Verankerungsfußes 42 gemäß Fig. 8b ist nur einer der Schenkel 48 mit dem zugehörigen Zapfen 50 sowie der zugehörigen Bohrung 51 sichtbar. Die Kontur des durch den Schenkel 48 verdeckten Jochs 49 ist durch eine gestrichelte Linie angedeutet. Ferner ist ersichtlich, dass die Schenkel 48 in der Seitenansicht eine dreieckige Kontur haben.

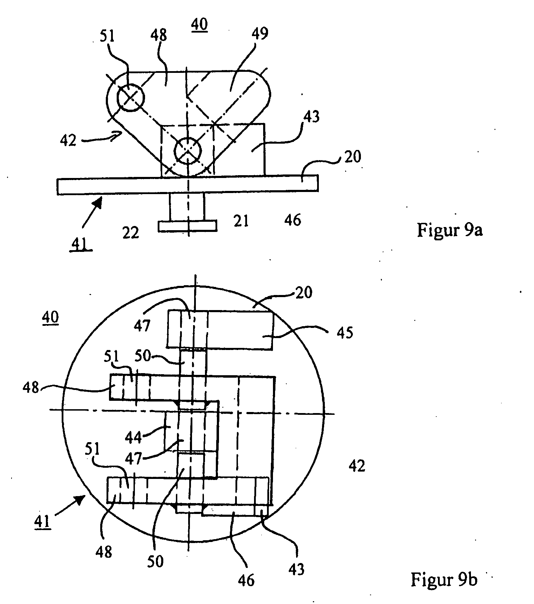

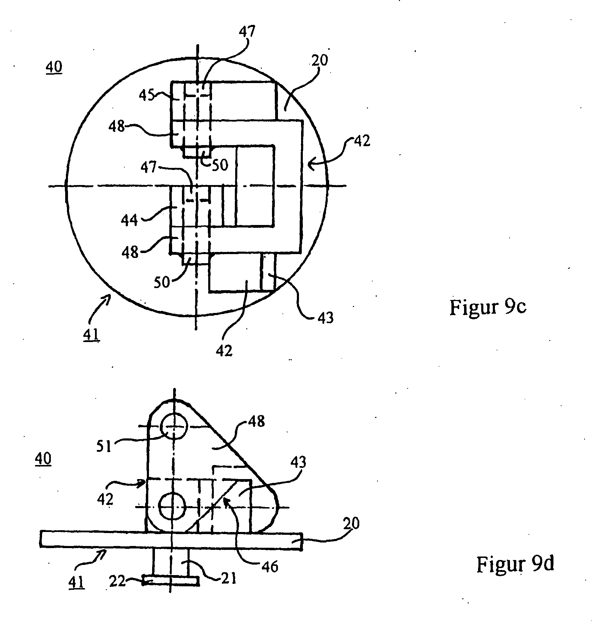

Das Verbinden von Verankerungsbasis 41 und den Verankerungsfuß 42 der zweiteiligen Ladungssicherungsvorrichtung 40 wird nachfolgend anhand der Fig. 9a-9d erläutert. Fig. 9a zeigt die Verankerungsbasis 41 und den Verankerungsfuß 42 in der Seitenansicht. Zum Verbinden des Verankerungsfußes 42 mit der Verankerungsbasis 40 wird der Verankerungsfuß 42 zunächst quasi auf die Spitze der durch die beiden Schenkel 48 gebildeten Dreieckskontur gestellt. Einer der Schenkel 48 liegt dabei an der Rampe 46 des ersten Führungselements 43 der Verankerungsbasis 41 an. Dann ist ein Einschieben der Zapfen 50 des Verankerungsfußes 42 in die jeweiligen Bohrungen 47 des zweiten und dritten Führungselements 44, 45 der Verankerungsbasis 41 möglich. Die gleiche Situation ist in Fig. 9b zur Veranschaulichung in der Draufsicht gezeigt. Nachdem die Zapfen 50 des Verankerungsfußes 42 ganz in die jeweiligen Bohrungen 47 eingeführt sind, kann - wie in Fig. 9c in der Draufsicht und in Fig. 9d in der Seitenansicht gezeigt - der Verankerungsfuß 42 durch Verschwenken in Richtung auf das erste Führungselement 43 umgelegt werden. Der Verankerungsfuß 42 wird in dieser Position gegen Abheben durch die Zapfen 50 und gegen Verschieben durch den Passsitz zwischen den Führungselementen 43, 44, 45 gesichert.

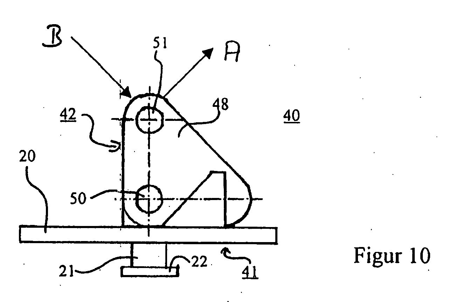

Fig. 10 zeigt die Belastungsmöglichkeiten des zweiteiligen Ladungssicherungselement 40. Im umgeklappten Zustand des Verankerungsfußes 42 liegen die Bohrungen 51 in den freien Enden der Schenkel 48 des Verankerungsfußes 42 in gerader Linie über den Zapfen 50, die in die jeweiligen Bohrungen 47 der Führungselemente 44, 45 der Verankerungsbasis 41 eingeführt sind. Die Mittelpunkte dieser Bohrungen 47 liegen (vgl. z.B. Fig. 7a, 7b, 9b, 9c) über einer der Mittellinien der Verankerungsbasis 41, so dass auch die Bohrungen 51 in den freien Enden der Schenkel 48 über derselben Mittellinie der Verankerungsbasis 41 liegen und somit eine zentrale Belastung des Verriegelungsbolzens 21 gewährleistet ist. In die Bohrungen 51 kann z.B. der in Fig. 4c dargestellte Normbolzen 26 eingeführt werden. Wenn an diesen Normbolzen 26 ein Zurrgurt oder dergleichen angeschlagen wird (nicht dargestellt), kann das zweiteilige Ladungssicherungselement 40 in Richtung des Pfeils A auf Zug belastet werden. Auch das zweiteilige Ladungssicherungselement 40 kann auf der Aufnahmeplatte 16 (vgl. Fig. 6) um 360° gedreht werden, so dass beliebige Ausrichtungen des zweiteiligen Ladungssicherungselementes 40 und damit entsprechende Sicherungen von Ladung 13 (Fig. 1) möglich sind. Entlang des Pfeils B ist ferner eine Druckbelastung des zweiteiligen Ladungssicherungselementes 40 möglich.

## Patentansprüche

1. Vorrichtung zur Sicherung von Ladung (13) auf einer Ladefläche (12) eines insbesondere spurgebundenen Fahrzeugs (10), mit einem Kuppelstück zum Verbinden einer Ladungssicherung mit der Ladefläche (12), das eine mit der Ladefläche (12) fest verbundene untere Kupplungshälfte und eine zur Verbindung mit der Ladungssicherung vorgesehene obere Kupplungshälfte aufweist, die eine Grundplatte (20) und einen unter der Grundplatte (20) angeordneten, mit dieser verbundenen Verriegelungsbolzen (21) mit einer Sperre (22) umfasst, wobei die obere Kupplungshälfte formschlüssig und lösbar mit der unteren Kupplungshälfte verbindbar ist, **dadurch gekennzeichnet, dass** die untere Kupplungshälfte eine mit der Ladefläche (12) verbindbare Aufnahmeplatte (16) umfasst, die ein als Langloch ausgebildetes Einschubloch (17) aufweist, das auf die Kontur des Verriegelungsbolzens (21) und der Sperre (22) abgestimmt ist, und dass zur Fixierung der oberen Kupplungshälfte auf der Aufnahmeplatte (16) der unteren Kupplungshälfte eine Sicherungsplatte (30) vorgesehen ist.

2. Vorrichtung nach Anspruch 1, **dadurch gekennzeichnet, dass** der insbesondere mittig unter der Grundplatte (20) angeordnete Verriegelungsbolzen (21) einstückig mit der vorzugsweise eine kreisförmige Außenkontur aufweisenden Grundplatte (20) verbunden ist.

3. Vorrichtung nach Anspruch 1, **dadurch gekennzeichnet, dass** die Sperre (22) einstückig, insbesondere am äußersten Ende eines freien Endes des Verriegelungsbolzens (21), mit dem Verriegelungsbolzen (21) verbunden und als außen umlaufender, senkrecht zur Mittelachse des Verriegelungsbolzens (21) und parallel zur Grundplatte (20) verlaufender Flansch ausgeführt ist.

4. Vorrichtung nach Anspruch 1, **dadurch gekennzeichnet, dass** das Einschubloch (17) in der Aufnahmeplatte (16) ein vergrößertes Rundloch an einem Ende aufweist, wobei die Kontur des Rundlochs auf den Durchmesser der Sperre (22) und die Kontur des verbleibenden Einschublochs (17) auf den Durchmesser des Verriegelungsbolzens (21) in dessen Mittelteil abgestimmt ist.

5. Vorrichtung nach Anspruch 1, **dadurch gekennzeichnet, dass** die Sicherungsplatte (30) mit wenigstens einem Sicherungsbolzen (32), insbesondere einem mit der Sicherungsplatte (30) einstückig verbundenen Sicherungsbolzen (32), versehen ist, wobei der oder jeder Sicherungsbolzen (32) zum Eingriff in ein korrespondierendes Sicherungsloch (18) in der Aufnahmeplatte (16) vorgesehen ist.

6. Vorrichtung nach Anspruch 5, **dadurch gekennzeichnet, dass** die Sicherungsplatte (30) mit einer auf die Außenkontur der Grundplatte (20) der oberen Kupplungshälfte abgestellten Innenbohrung (31) versehen ist, wobei beim Vorhandensein mehrerer Sicherungsbolzen (32) deren Position symmetrisch um die Innenbohrung (31) verteilt ist.

7. Vorrichtung nach Anspruch 1, **dadurch gekennzeichnet, dass** die Sicherungsplatte (30) gegen Abheben von der Aufnahmeplatte (16) mittels wenigstens einer Sicherungsraste (33), vorzugsweise zumindest zwei einander jeweils paarweise gegenüberliegender Sicherungsrasten (33), gesichert ist.

8. Vorrichtung nach Anspruch 7, **dadurch gekennzeichnet, dass** die oder jede Sicherungsraste (33) einen federnd gelagerten Stift (34) umfasst, dessen eines Ende aus der Sicherungsraste (33) herausragt und zum Eingriff in eine Nut oder Vertiefung vorgesehen ist und dass die oder jede Sicherungsraste (33) in der Sicherungsplatte (30) oder der Grundplatte (20) angeordnet ist und der Stift (34) in eine Vertiefung oder umlaufende Nut im Rand der Grundplatte (20) bzw. im Rand der Innenbohrung (31) der Sicherungsplatte (30) eingreift.

9. Vorrichtung nach einem der vorhergehenden Ansprüche, **dadurch gekennzeichnet, dass** auf der Oberseite der Grundplatte (20) zwei vertikale Laschen (23, 24) parallel zueinander und beabstandet voneinander angeordnet sind, die an ihrem freien Ende jeweils eine Bohrung (25) zum Einführen eines Bolzens, insbesondere eines Normbolzens (26), aufweisen, deren Achsen zusammenfallen und parallel zur Oberfläche der Grundplatte (20), insbesondere über einer Mittellinie der Grundplatte (20), verlaufen.

## Claims

1. Apparatus for securing freight (13) on a load area (12) of a vehicle (10) which is, in particular, railborne, having a coupling piece for connecting a freight fastener to the load area (12), which coupling piece has a lower coupling half which is connected fixedly to the load area (12) and an upper coupling half which is provided for connection to the load fastener and comprises a base plate (20) and a locking pin (21) which is arranged below the base plate (20), is connected to the latter and has a catch (22), it being possible for the upper coupling half to be connected positively and releasably to the lower coupling half, **characterized in that** the lower coupling half comprises a receiving plate (16) which can be connected to the load area (12) and has an insertion hole (17) which is configured as a slot and is adapted to the contour of the locking pin (21) and the catch (22), and **in that** a fastener plate (30) is provided for fixing the upper coupling half on the receiving plate (16) of the lower coupling half.

2. Apparatus according to Claim 1, **characterized in that** the locking pin (21) which is arranged, in particular, centrally below the base plate (20) is connected integrally to the base plate (20) which preferably has a circular outer contour.

3. Apparatus according to Claim 1, **characterized in that** the catch (22) is connected integrally to the locking pin (21), in particular at the outermost end of a free end of the locking pin (21), and is configured as a flange which encircles it on the outside and extends perpendicularly with respect to the centre axis of the locking pin (21) and parallel to the base plate (20).

4. Apparatus according to Claim 1, **characterized in that** the insertion hole (17) in the receiving plate (16) has an enlarged round hole at one end, the contour of the round hole being adapted to the diameter of the catch (22) and the contour of the remaining insertion hole (17) being adapted to the diameter of the locking pin (21) in its centre part.

5. Apparatus according to Claim 1, **characterized in that** the securing plate (30) is provided with at least one securing pin (32), in particular a securing pin (32) which is connected integrally to the securing plate (30), the or each securing pin (32) being provided for engagement into a corresponding securing hole (18) in the receiving plate (16).

6. Apparatus according to Claim 5, **characterized in that** the securing plate (30) is provided with an inner hole (31) which is based on the outer contour of the base plate (20) of the upper coupling half, wherein, if there are a plurality of securing pins (32), their positions are distributed symmetrically around the inner hole (31).

7. Apparatus according to Claim 1, **characterized in that** the securing plate (30) is secured against being raised up from the receiving plate (16) by means of at least one securing latch (33), preferably at least two securing latches (33) which lie opposite one another in each case in pairs.

8. Apparatus according to Claim 7, **characterized in that** the or each securing latch (33) comprises a pin (34) which is mounted in a sprung manner and one end of which protrudes out of the securing latch (33) and is provided for engagement into a groove or depression, and **in that** the or each securing latch (33) is arranged in the securing plate (30) or the base plate (20) and the pin (34) engages into a depression or circumferential groove in the edge of the base plate (20) or in the edge of the inner hole (31) of the securing plate (30).

9. Apparatus according to one of the preceding claims, **characterized in that** two vertical brackets (23, 24) are arranged parallel to one another and spaced apart from one another on the upper side of the base plate (20), which vertical brackets (23, 24) have in each case one hole (25) at their free end for the insertion of a pin, in particular a standard pin (26), the axes of which coincide and extend parallel to the surface of the base plate (20), in particular above a centre line of the base plate (20).

## Revendications

1. Dispositif pour immobiliser une charge (13) sur une surface de chargement (12) d'un véhicule (10), en particulier roulant sur rails, comprenant un élément d'accouplement pour connecter une fixation de la charge à la surface de chargement (12), qui présente une moitié d'accouplement inférieure connectée fixement à la surface de chargement (12) et une moitié d'accouplement supérieure prévue pour être connectée à la fixation de la charge, qui comprend une plaque de base (20) et un boulon de verrouillage (21) disposé sous la plaque de base (20) et connecté à celle-ci, muni d'un blocage (22), la moitié d'accouplement supérieure pouvant être connectée par engagement par coopération de forme et de manière amovible à la moitié d'accouplement inférieure, **caractérisé en ce que** la moitié d'accouplement inférieure comprend une plaque de réception (16) pouvant être connectée à la surface de chargement (12), laquelle présente un trou d'insertion (17) réalisé sous forme de trou oblong, qui est adapté au contour du boulon de verrouillage (21) et du blocage (22), et **en ce que** l'on prévoit pour la fixation de la moitié d'accouplement supérieure sur la plaque de réception (16) de la moitié d'accouplement inférieure, une plaque de fixation (30).

2. Dispositif selon la revendication 1, **caractérisé en ce que** le boulon de verrouillage (21) disposé en particulier centralement sous la plaque de base (20) est connecté d'une seule pièce avec la plaque de base (20) présentant de préférence un contour extérieur circulaire.

3. Dispositif selon la revendication 1, **caractérisé en ce que** le blocage (22) est connecté d'une seule pièce au boulon de verrouillage (21), notamment à l'extrémité la plus extérieure d'une extrémité libre du boulon de verrouillage (21), et est réalisé sous la forme d'une bride périphérique extérieure, s'étendant perpendiculairement à l'axe médian du boulon de verrouillage (21) et parallèlement à la plaque de base (20).

4. Dispositif selon la revendication 1, **caractérisé en ce que** le trou d'insertion (17) présente dans la plaque de réception (16) un trou rond agrandi à une extrémité, le contour du trou rond étant adapté au diamètre du blocage (22) et le contour du trou d'insertion restant (17) étant adapté au diamètre du boulon de verrouillage (21) dans sa partie centrale.

5. Dispositif selon la revendication 1, **caractérisé en ce que** la plaque de fixation (30) est pourvue d'au moins un boulon de fixation (32), notamment d'un boulon de fixation (32) connecté d'une seule pièce à la plaque de fixation (30), le ou chaque boulon de fixation (32) étant prévu pour s'engager dans un trou de fixation (18) correspondant dans la plaque de réception (16).

6. Dispositif selon la revendication 5, **caractérisé en ce que** la plaque de fixation (30) est pourvue d'un alésage interne (31) ajusté au contour extérieur de la plaque de base (20) de la moitié d'accouplement supérieure, et lorsque plusieurs boulons de fixation (32) sont prévus, leur position est répartie symétriquement autour de l'alésage interne (31).

7. Dispositif selon la revendication 1, **caractérisé en ce que** la plaque de fixation (30) est fixée contre tout soulèvement depuis la plaque de réception (16) au moyen d'au moins un cran de fixation (33), de préférence d'au moins deux crans de fixation (33) à chaque fois opposés l'un à l'autre par paire.

8. Dispositif selon la revendication 7, **caractérisé en ce que** le ou chaque cran de fixation (33) comprend une goupille (34) montée élastiquement, dont une extrémité ressort du cran de fixation (33) et est prévue pour s'engager dans une rainure ou un renfoncement et **en ce que** le ou chaque cran de fixation (33) est disposé dans la plaque de fixation (30) ou la plaque de base (20) et la goupille (34) vient en prise dans un renfoncement ou une rainure périphérique dans le bord de la plaque de base (20) ou dans le bord de l'alésage interne (31) de la plaque de fixation (30).

9. Dispositif selon l'une quelconque des revendications précédentes, **caractérisé en ce que** sur le côté supérieur de la plaque de base (20) sont disposées deux pattes verticales (23, 24) parallèlement l'une à l'autre et à distance l'une de l'autre, qui présentent à leur extrémité libre à chaque fois un alésage (25) pour insérer un boulon, notamment un boulon standardisé (26), dont les axes coïncident et s'étendent parallèlement à la surface de la plaque de base (20), notamment sur un axe médian de la plaque de base (20).
